# EUROPÄISCHE PATENTSCHRIFT

(11) **EP 4 589 141 B1**
(45) Veröffentlichungstag und Bekanntmachung des Hinweises auf die Patenterteilung: **24.06.2026**
(21) Anmeldenummer: 24152194.7
(22) Anmeldetag: 16.01.2024
(51) Int. Cl.: F03D 80/70, F03D 80/50

(54) **ROTORTRÄGER FÜR EINE ROTORNABE EINER WINDENERGIEANLAGE UND VERFAHREN ZUM WARTEN EINER WINDENERGIEANLAGE**
ROTOR SUPPORT FOR A ROTOR HUB OF A WIND TURBINE AND METHOD FOR MAINTAINING A WIND TURBINE
SUPPORT DE ROTOR POUR UN MOYEU DE ROTOR D'UNE ÉOLIENNE ET PROCÉDÉ D'ENTRETIEN D'UNE ÉOLIENNE

(43) Veröffentlichungstag der Anmeldung: 23.07.2025
(73) Patentinhaber: Wobben Properties GmbH, 26607 Aurich (DE)
(72) Erfinder: Haller, Matthias, 26607 Aurich (DE); Lambertz, Walter, 26605 Aurich (DE)
(74) Vertreter: Eisenführ Speiser

(56) Entgegenhaltungen:
- CN-B- 110 173 400
- CN-U- 213 360 329
- US-A1- 2009 309 369
- US-A1- 2018 073 489

## Beschreibung

Die Erfindung bezieht sich auf einen Rotorträger für eine Rotornabe einer Windenergieanlage, welcher dazu eingerichtet ist, mittels einer Hauptlagerung drehbar an einem Achszapfen der Windenergieanlage gelagert zu werden, wobei die Hauptlagerung eine erste Lagereinheit und eine in Achsrichtung des Achszapfens beabstandete zweite Lagereinheit aufweist, mit einem nabenseitigen Endabschnitt, dem die erste Lagereinheit zugeordnet ist, und einem maschinenträgerseitigen Endabschnitt, dem die zweite Lagereinheit zugeordnet ist.

Die Erfindung betrifft des Weiteren eine Rotoranordnung für eine Windenergieanlage, eine Windenergieanlage als solche sowie ein Verfahren zum Warten einer Windenergieanlage.

Windenergieanlagen sind hinreichend im Stand der Technik bekannt. Sie weisen einen Turm auf, an dessen oberen Ende eine Gondel drehbar gelagert ist. Im Inneren der Gondel ist üblicherweise ein Maschinenträger angeordnet, der einen Generator, eine Antriebswelle für den Generator, optional ein Getriebe und eine relativ zum Maschinenträger drehbar aufgenommene Rotornabe mit mehreren Rotorblättern trägt. Die Rotornabe ist mit einem Rotorträger verbunden, der mittels einer Hauptlagerung drehbar an einem starr mit dem Maschinenträger der Windenergieanlage verbundenen Achszapfen gelagert ist. Achszapfen und Maschinenträger bilden dabei eine feste strukturelle Einheit aus. Die Hauptlagerung für den Rotorträger, der neben der Rotornabe auch häufig den elektromechanischen Rotor des Generators aufnimmt, umfasst insbesondere eine erste Lagereinheit und eine in Achsrichtung des Achszapfens zur ersten Lagereinheit beabstandete, zweite Lagereinheit.

Der Rotorträger weist einen nabenseitigen Endabschnitt, dem die erste Lagereinheit zugeordnet ist, und einen maschinenträgerseitigen Endabschnitt auf, dem die zweite Lagereinheit zugeordnet ist. Für einen störungsfreien Betrieb der Windenergieanlage ist unter anderem das regelmäßige Schmieren der Hauptlagerung notwendig. Das Schmieren der ersten Lagereinheit am nabenseitigen Endabschnitt des Rotorträgers ist relativ einfach umsetzbar, da die erste Lagereinheit unproblematisch von der Rotornabe aus zugänglich ist.

Das Schmieren der zweiten Lagereinheit, welche dem maschinenträgerseitigen Endabschnitt zugeordnet ist, gestaltet sich deutlich aufwendiger. Um die Schmiermittelzufuhr zur zweiten Lagereinheit zu gewährleisten, ist wenigstens eine Schlauchleitung aus dem Gehäuse der Rotornabe heraus zu führen, außen am Rotorträger entlang in Richtung des Maschinenträgers zu verlegen und diese dann von der Stirnseite des Rotorträgers am maschinenträgerseitigen Endabschnitt aus in Richtung der zweiten Lagereinheit zurückzuführen. Das Verlegen der Schlauchleitung erfordert eine Verlegung an verschiedenen Baugruppen der Windenergieanlage entlang, was das Montieren der Schmiermittelzufuhr grundsätzlich sehr aufwendig macht. Zudem kann das Montieren der Schmiermittelleitung erst am Aufstellort erfolgen.

CN 213 360 329 U betrifft einen Windturbinengenerator, insbesondere ein Schmiersystem für eine Hauptlagerung zwischen einer Statorwelle und einer Rotorwelle einer Windturbine. Die Hauptlagerung mit ihren Lagern an der Statorwelle und der dazu drehbar aufgenommenen Rotorwelle weist ein Fettrückgewinnungssystem auf, mittels dessen altes, verbrauchtes Fett, das durch jeweils den Lagern über entsprechende Schmiermittelkanäle zugeführtes frisches Fett aus dem Lagerbereich der Rotorwelle abgeführt wird, über einen etwa mittig zwischen den Lagern angeordneten Sammelbereich und ein daran angeschlossenes Fettführungsrohr in eine Fettentnahmebox abgeleitet wird.

Der Erfindung lag somit die Aufgabe zugrunde, einen Rotorträger für eine Rotornabe einer Windenergieanlage, eine Rotoranordnung für eine Windenergieanlage, eine Windenergieanlage, sowie ein Verfahren zum Warten einer Windenergieanlage der eingangs bezeichneten Art anzugeben, mittels der die vorstehend beschriebenen Nachteile möglichst weitgehend behoben werden. Insbesondere lag der Erfindung die Aufgabe zugrunde, eine solche Rotoranordnung dahingehend zu verbessern, dass die Schmiermittelzufuhr verbessert wird.

Die Erfindung löst die ihr zugrundeliegendeAufgabe gemäß einem ersten Aspekt bei einem Rotorträger für eine Rotornabe einer Windenergieanlage mit den Merkmalen von Anspruch 1. Insbesondere wird vorgeschlagen, dass der Rotorträger eine sich vom nabenseitigen zum maschinenträgerseitigen Endabschnitt erstreckende Schmiermittelpassage aufweist, die fluidleitend mit der zweiten Lagereinheit verbunden und dazu eingerichtet ist, die zweite, am maschinenträgerseitigen Endabschnitt angeordnete Lagereinheit von dem nabenseitigen Endabschnitt des Rotorträgers aus zu schmieren. Anstelle eines aufwändigen Verlegens einer Schlauchleitung entlang der Außenseite von Rotornabe und Rotorträger erfolgt die Schmiermittelzufuhr zur zweiten, am maschinenträgerseitigen Endabschnitt angeordneten Lagereinheit erfindungsgemäß über die unmittelbar am/im Rotorträger ausgebildete Schmiermittelpassage. Das Schmiermittel kann damit direkt durch den Rotorträger hindurchgeführt werden. Die Schmiermittelzufuhr verläuft dann durch einen wenigstens weitgehend witterungsfreien Bereich innerhalb der Windenergieanlage. Das durch die erfindungsgemäße Schmiermittelpassage hindurchgeführte Schmiermittel ist dadurch nicht mehr so starken Temperaturschwankungen ausgesetzt, was sich auf die Viskosität und damit Schmierleistung, den Förderwiderstand, und das Risiko der Schmiermittelverstopfung vorteilhaft auswirkt. Zudem kann durch das Verlegen der Schmiermittelpassage in den Rotorträger die benötigte Leitungslänge verringert werden.

Unter dem Begriff "witterungsfrei" ist zu verstehen, dass beim Führen des Schmiermittels durch den Rotorträger die Schmiermittelpassage nur vermindert, oder gar nicht, der in der Umgebungsluft transportierten Feuchtigkeit, und ggf. Partikeln, und/oder direktem Wind ausgesetzt ist und zudem auch der Einfluss der Außentemperaturen durch das geschützte Führen im Inneren des Rotorträgers vermindert ist.

Gemäß einer bevorzugten Ausführungsform ist die Schmiermittelpassage als durchgehender Schmiermittelkanal oder durchgehende Schmiermittelleitung im Rotorträger ausgebildet. Eine solch erfindungsgemäße Schmiermittelpassage kann beispielsweise beim Herstellen des Rotorträgers erzeugt oder bei der Montage des Rotorträgers im Werk nahezu vollständig vormontiert werden. Bei der Endmontage der Windenergieanlage am Aufstellort ist am nabenseitigen Endabschnitt dann nur noch eine fluidleitende Verbindung mit einer insbesondere in der Rotornabe angeordneten Schmiermittelversorgung herzustellen. Das Anschließen der Schmiermittelversorgung kann somit für beide Lagereinheiten zentral von einer Stirnseite des Rotorträgers aus, nämlich dem nabenseitigen Endabschnitt des Rotorträgers aus erfolgen.

In der möglichen Ausführung als Schmiermittelkanal ist eine sich vom nabenseitigen Endabschnitt zum maschinenträgerseitigen Endabschnitt erstreckende durchgehende Bohrung erzeugt. Das zum Schmieren der zweiten Lagereinheit benötigte Schmiermittel wird unmittelbar durch die erzeugte Bohrung im Rotorträger bis zum maschinenträgerseitigen Endabschnitt hindurchgeleitet.

In einer alternativen Ausführungsform umfasst die Schmiermittelpassage vorzugsweise wenigstens zwei axial zueinander beabstandete Schmiermittelkanalabschnitte im Rotorträger, welche durch eine Schmiermittelleitung fluidleitend miteinander verbunden sind. Statt einer durchgehenden Bohrung im Rotorträger werden in bestimmten Bereichen des Rotorträgers, vorzugsweise in Achsrichtung des Rotorträgers verlaufende, Schmiermittelkanalabschnitte ausgebildet. Damit wird die Ausgestaltung der Schmiermittelpassage, wegen der deutlich kürzeren Kanalabschnitte, im Rotorträger fertigungstechnisch vereinfacht.

Vorzugsweise erstreckt sich ein erster Schmiermittelkanalabschnitt vom nabenseitigen Endabschnitt aus in Achsrichtung, und ein zweiter Schmiermittelkanalabschnitt erstreckt sich vom maschinenträgerseitigen Endabschnitt aus in Achsrichtung.

Vorzugsweise sind beide Kanalabschnitte endseitig im Rotorträger ausgebildet und erstrecken sich jeweils etwa über ein Viertel bis etwa die Hälfte der Gesamtlänge des Rotorträgers.

Die Kanalabschnitte sind in einer bevorzugten Ausführungsform koaxial zueinander ausgerichtet, können jedoch ausgehend von einer Mittelachse des Rotorträgers, in radialer Richtung in bestimmten Grenzen zueinander versetzt angeordnet sein. Mögliche Abweichungen in der Ausrichtung der Kanalabschnitte zueinander können mittels der die Kanalabschnitte verbindenden Schmiermittelleitung ausgeglichen werden.

In einer bevorzugten Ausführungsform weist die Schmiermittelleitung eine Rohrleitung auf, welche in mindestens einem Durchgang am Rotorträger aufgenommen ist und sich vom nabenseitigen zum maschinenträgerseitigen Endabschnitt des Rotorträgers erstreckt. In dieser bevorzugten Ausführungsform wird das Schmiermittel zum Schmieren der zweiten Lagereinheit in einer separaten Rohrleitung zum maschinenträgerseitigen Endabschnitt geführt. Damit ist einer hypothetischen Korrosion des Rotorträgers durch das Schmiermittel oder darin enthaltene Zusätze entgegengewirkt.

Die separate Rohrleitung ist vorzugsweise in mindestens einem Durchgang, vorzugsweise zwei axial zueinander beabstandeten Durchgängen, am Rotorträger eingeführt. Ähnlich wie die Schmiermittelkanalabschnitte sind auch die axial zueinander beabstandeten Durchgänge am Rotorträger vorzugsweise koaxial zueinander ausgerichtet, was das Aufnehmen der Schmiermittelleitung am Rotorträger vereinfacht.

In einer weiteren bevorzugten Ausführungsform hat der Durchgang ein radiales Spiel zur Rohrleitung, und die Rohrleitung ist vorzugsweise mittels einer Rohrverschraubung entlang eines Abschnitts des Durchgangs gesichert. Mit Hilfe des radialen Spiels erfolgt eine nahezu vollständige strukturelle Trennung der Schmiermittelleitung vom Rotorträger. Zudem können durch das radiale Spiel zwischen der Außenseite der Rohrleitung und dem bzw. den Durchgängen am Rotorträger geringfügige Abweichungen in radialer Richtung von axial zueinander beabstandeten Durchgängen einfach ausgeglichen werden. Die Rohrleitung wird vorzugsweise mittels einer Rohrverschraubung, vorzugsweise am nabenseitigen Endabschnitt insbesondere für eine axiale Arretierung zum Rotorträger befestigt. In einer bevorzugten Ausführung ist die Rohrleitung zusätzlich unter Verwendung eines Dämpfungselements am Rotorträger befestigt.

Die Schmiermittelleitung ist vorzugsweise zumindest abschnittsweise flexibel ausgeführt. Auch größere Abweichungen in radialer Richtung von zwei die als Rohrleitung ausgebildete Schmiermittelleitung aufnehmenden Durchgängen am Rotorkörper können damit einfach ausgeglichen werden. Insbesondere ein mittlerer Abschnitt der sich durch den Rotorträger in Achsrichtung erstreckenden Rohrleitung kann als Schlauch- oder Stahlflex-Leitung ausgeführt sein.

In einer bevorzugten Ausführungsform der Erfindung ist die Schmiermittelleitung aus einer an sich starren metallischen Rohrleitung ausgebildet, welche aufgrund ihrer Materialeigenschaften eine bevorzugt geringe Biegesteifigkeit aufweist, sodass Abweichungen in radialer Richtung der Durchgänge sich durch das Biegen der Rohrleitung ausgleichen lassen.

In einer bevorzugten Ausführungsform des Rotorträgers ist am maschinenträgerseitigen Endabschnitt zwischen dem Durchgang und der Rohrleitung ein Dichtelement angeordnet. Mit Hilfe des Dichtelements erfolgt eine Abdichtung zwischen Rohrleitung und Durchgang, sodass Schmiermittel, das im Bereich des maschinenträgerseitigen Endabschnitts aus der Rohrleitung austritt, am Eintritt in den die Rohrleitung aufnehmenden Durchgang und somit am Zurückströmen in Richtung des nabenseitigen Endabschnitts gehindert wird. Das Dichtelement ist vorzugsweise in einer am maschinenträgerseitigen Endabschnitt ausgebildeten Aufnahme angeordnet. Das Dichtelement ist in einer möglichen Ausgestaltung ein Dichtring, der mit der Außenseite der Rohrleitung und der den Durchgang begrenzenden Wandfläche abdichtend in Anlage steht. Vorzugsweise erfolgt mittels des Dichtelements gleichzeitig auch eine Ausrichtung der Rohrleitung im Durchgang in radialer Richtung, wodurch eine direkte strukturelle Verbindung zwischen dem Rotorträger und der Rohrleitung vermieden ist.

Gemäß einer bevorzugten Ausführungsform ist vorgesehen, dass der Rotorträger mehrere über seinen Umfang verteilt angeordnete Schmiermittelpassagen aufweist. Vorzugsweise sind mindestens zwei solcher Schmiermittelpassagen am Rotorträger vorgesehen, über die das Schmiermittel zur zweiten Lagereinheit am maschinenträgerseitigen Endabschnitt geleitet wird. Das Zuführen des Schmiermittels erfolgt vorzugsweise kontinuierlich oder in vordefinierten Zeitintervallen durch eine mit den Schmiermittelpassagen fluidleitend verbundene Schmiermittelversorgung. Vorzugsweise sind die mehreren Schmiermittelpassagen gleichmäßig über den Umfang verteilt angeordnet. In einer Ausführung mit zwei Schmiermittelpassagen, sind diese um die Mittenachse des Rotorträgers in einem Winkel von 180° angeordnet. Die zwei oder mehr Schmiermittelpassagen sind vorzugsweise gemäß einer der vorstehend beschriebenen bevorzugten Ausführungsformen ausgebildet. Die Schmiermittelpassagen können identisch oder auch unterschiedlich ausgeführt sein.

Eine Bevorzugte Ausführungsform sieht vor, dass am nabenseitigen und am maschinenträgerseitigen Endabschnitt jeweils eine Aufnahme für die erste bzw. zweite Lagereinheit vorgesehen ist. Damit ist eine Arretierung der Lagereinheiten in axialer wie auch radial Richtung am Rotorträger bewirkt. Im montierten Zustand des Rotorträgers sind vorzugsweise am nabenseitigen und maschinenträgerseitigen Endabschnitt nahezu geschlossene Schmiermittelkammern ausgebildet, in denen die Lagereinheiten für den am Rotorzapfen der Windenergieanlage drehbar gelagerten Rotorträger aufgenommen sind. Das den nabenseitigen und maschinenträgerseitigen Endabschnitten zugeführte Schmiermittel gelangt in den Schmiermittelkammern unmittelbar mit den Lagereinheiten der Hauptlagerung in Kontakt. Die Schmiermittelpassage für die zweite Lagereinheit mündet insbesondere im Bereich der Aufnahme für die zweite Lagereinheit am maschinenträgerseitigen Endabschnitt aus.

Die Erfindung betrifft gemäß einem weiteren Aspekt eine Rotoranordnung für eine Windenergieanlage mit zumindest einer Rotornabe, die zur Montage eines oder mehrerer Rotorblätter eingerichtet ist, und wenigstens einem Rotorträger, der dazu eingerichtet ist, die darin angeordnete Rotornabe drehbar an einem Rotorzapfen einer Windenergieanlage zu lagern.

Die Rotoranordnung löst die weiter oben bezeichnete Aufgabe, indem der Rotorträger der Rotoranordnung nach einer der vorstehend beschriebenen bevorzugten Ausführungsformen ausgeführt ist, die Rotornabe drehfest wobei mit dessen nabenseitigen Ende verbunden ist. Mithilfe eines derartig ausgebildeten Rotorträgers ist ein vereinfachtes Schmieren der erfindungsgemäßen Rotoranordnung mit seiner am maschinenträgerseitigen Endabschnitt des Rotorträgers angeordneten Lagereinheit bewirkt. Durch das Verlegen der Schmiermittelpassage in den Rotorträger hinein erfolgt das Führen des Schmiermittels in einem nahezu bewitterungsfreien Bereich der Windenergieanlage. Im Betrieb der Windenergieanlage erwärmen sich durch die üblicherweise fortwährende Rotation des Rotorkörpers um den Achszapfen zudem die Lagereinheiten was das Fließverhalten des Schmiermittels speziell bei niedrigen Außentemperaturen zusätzlich begünstigt.

In einem dritten Aspekt betrifft die vorliegende Erfindung eine Windenergieanlage mit einem Turm, einer auf dem Turm drehbar angeordneten Gondel und einer Rotornabe mit einer Anzahl an Rotorblätter, welche mittels eines Rotorträgers drehbar an der Gondel gelagert ist.

Die Erfindung löst die eingangs beschriebene Aufgabe, indem der Rotorträger gemäß einer der vorstehend beschriebenen bevorzugten Ausführungsformen ausgebildet ist.

Die Erfindung macht sich im zweiten wie auch im dritten Aspekt dieselben Vorteile zunutze wie der Rotorträger gemäß dem ersten Aspekt. Bevorzugte Ausführungsformen bzw. Weiterbildungen des ersten Aspekts sind zugleich auch bevorzugte Ausführungsformen bzw. Weiterbildungen der Rotoranordnung gemäß dem zweiten Aspekt und umgekehrt bzw. der Windenergieanlage gemäß dem dritten Aspekt und umgekehrt, weswegen zur Vermeidung von Wiederholungen diesbezüglich auf die obigen Ausführungen verwiesen wird.

In noch einem weiteren Aspekt bezieht sich die Erfindung auf ein Verfahren zum Warten einer Windenergieanlage, insbesondere einer Windenergieanlage nach einer der vorstehend beschriebenen, bevorzugten Ausführungsformen, welche eine Rotornabe aufweist, die mittels eines Rotorträgers über eine Hauptlagerung drehbar an einem starr mit einem Maschinenträger der Windenergieanlage verbundenen Achszapfen gelagert ist, wobei die Hauptlagerung drehbar an einem Achszapfen der Windenergieanlage aufgenommen ist, wobei die Hauptlagerung für den Rotorträger mindestens eine erste Lagereinheit und eine in Achsrichtung des Achszapfen zur ersten Lagereinheit beabstandete zweite Lagereinheit aufweist. Das erfindungsgemäße Verfahren löst die vorstehend beschriebene Aufgabe mit zumindest dem Schritt: Schmieren der zweiten, einem maschinenseitigen Endabschnitt des Rotorträgers zugeordneten Lagereinheit über eine sich durch den Rotorträger erstreckende Schmiermittelpassage von einem nabenseitigen Ende des Rotorträgers aus.

Mithilfe des erfindungsgemäßen Verfahrens wird das Schmieren der dem maschinenträgerseitigen Endabschnitt des Rotorträgers zugeordneten Lagereinheit vereinfacht. Vorzugsweise erfolgt das Schmieren der zweiten Lagereinheit nahezu oder vollständig frei von Witterungseinflüssen. Das Schmieren beider Lagereinheiten erfolgt insbesondere vom nabenseitigen Endabschnitt des Rotorträgers aus, d. h. vom drehenden Teil der Windenergieanlage aus, wobei das Ausbilden der Schmiermittelpassage zur ersten wie auch zur zweiten Lagereinheit über den kürzest möglichen Weg verwirklicht werden kann. Vorzugsweise erfolgt das Schmieren der zweiten Lagereinheit über eine in den Rotorträger integrierte Schmiermittelleitung, wobei das Schmiermittel beim Hindurchleiten durch den Rotorträger wegen der vorzugsweise permanenten Rotation des Rotorträgers um den Achszapfen und die bei der Drehbewegung entstehende Reibungswärme in der Hauptlagerung partiell erwärmt wird, was das Fließverhalten des Schmiermittels speziell bei niedrigen Außentemperaturen verbessert.

Die Erfindung macht sich auch in diesem Aspekt dieselben Vorteile zunutze wie der Rotorträger, die Rotoranordnung bzw. die Windenergieanlage. Bevorzugte Ausführungsformen bzw. Weiterbildungen der ersten drei Erfindungsaspekte sind zugleich auch bevorzugte Ausführungsformen bzw. Weiterbildungen des oben beschriebenen Verfahrens und umgekehrt, weswegen zur Vermeidung von Wiederholungen diesbezüglich wiederum auf die obigen Ausführungen verwiesen wird.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Ansicht einer Windenergieanlage zum Erzeugen elektrischer Energie;
- Fig. 2:: eine Ansicht einer erfindungsgemäßen Rotoranordnung einer Windenergieanlage nach Fig. 1 im Schnitt;
- Fig. 3:: eine Teilansicht eines erfindungsgemäßen Rotorträgers mit einer darin ausgebildeten Schmiermittelpassage, und
- Fig. 4:: eine Teilansicht des in Fig. 3 durch die Einkreisung III gekennzeichneten Bereichs um die zweite Lagereinheit.

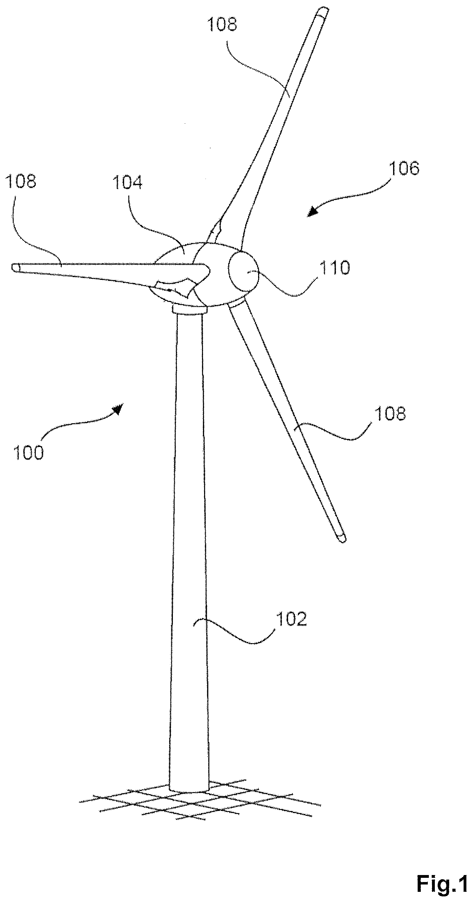

Fig. 1 zeigt eine Windenergieanlage 100 mit einem Turm 102 und einer Gondel 104. An der Gondel 104 ist eine Rotornabe 106 mit drei Rotorblättern 108 und einem Spinner 110 angeordnet. Die Rotorblätter 108 sind mit ihrem Rotorblattwurzeln an der Rotornabe 106 drehbar aufgenommen. Die Rotornabe 106 wird im Betrieb durch die auf die Rotorblätter 108 wirkende Luftströmung in eine Drehbewegung versetzt und treibt dadurch einen nicht näher gezeigten Generator im Inneren der Gondel 104 an.

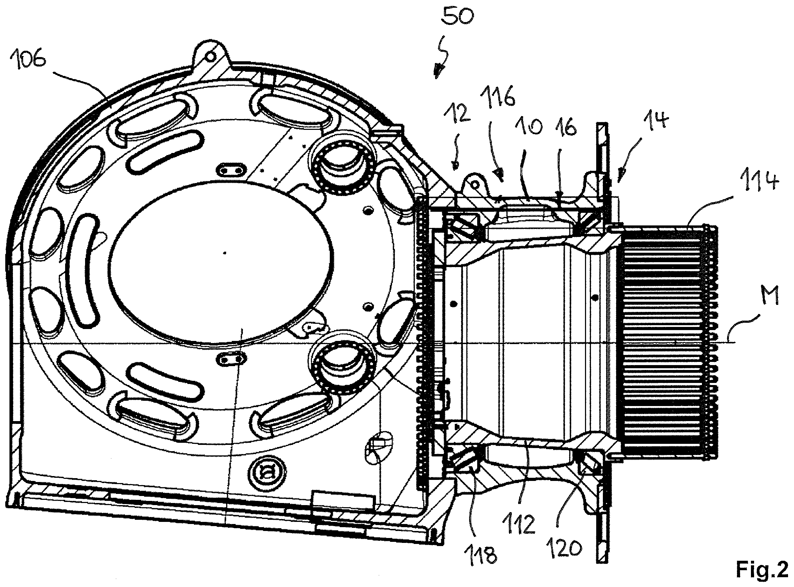

Um die Gondel 104 mit dem Turm 102 der Windenergieanlage 100 zu koppeln, wird üblicherweise ein nicht näher abgebildeter Maschinenträger verwendet. Der Maschinenträger weist üblicherweise eine Schnittstelle zum Verbinden des Maschinenträgers mit einem ebenfalls nicht näher dargestellten Azimutlager der Windenergieanlage 100 auf. Ferner umfasst der nicht näher dargestellte Maschinenträger eine zweite Schnittstelle zur Montage zumindest eines starr mit dem Maschinenträger der Windenergieanlage 100 verbundenen und in Fig. 2 gezeigten Achszapfen 112 auf. Der Achszapfen 112 ist über eine Vielzahl von daran vorgesehenen Verschraubungen 114 starr mit dem Maschinenträger verbunden.

Am Achszapfen 112 der Windenergieanlage 100 ist ein Rotorträger 10 für die Rotornabe 106 der Windenergieanlage 100 drehbar um die Mittenachse M des Achszapfens 112. aufgenommen. Rotorträger 10 und Rotornabe 106 bilden eine erfindungsgemäße Rotoranordnung 50 aus, die über eine Hauptlagerung 116 drehbar am Achszapfen 112 gelagert ist.

Die Hauptlagerung 116 umfasst eine erste Lagereinheit 118 und eine in Achsrichtung des Achszapfens 112 zur ersten Lagereinheit 118 beabstandete, zweite Lagereinheit 120 auf wodurch der Rotorträger 10 bevorzugt an seinen einander gegenüberliegenden Endabschnitten 12, 14 über die Lagereinheiten 118, 120 mit dem Achszapfen 112 kraftaufnehmend gekoppelt ist.

Die erste Lagereinheit 118 ist einem nabenseitigen Endabschnitt 12 zugeordnet und die zweite Lagereinheit 120 ist einem maschinenträgerseitigen Endabschnitt 14 des Rotorträger zugeordnet.

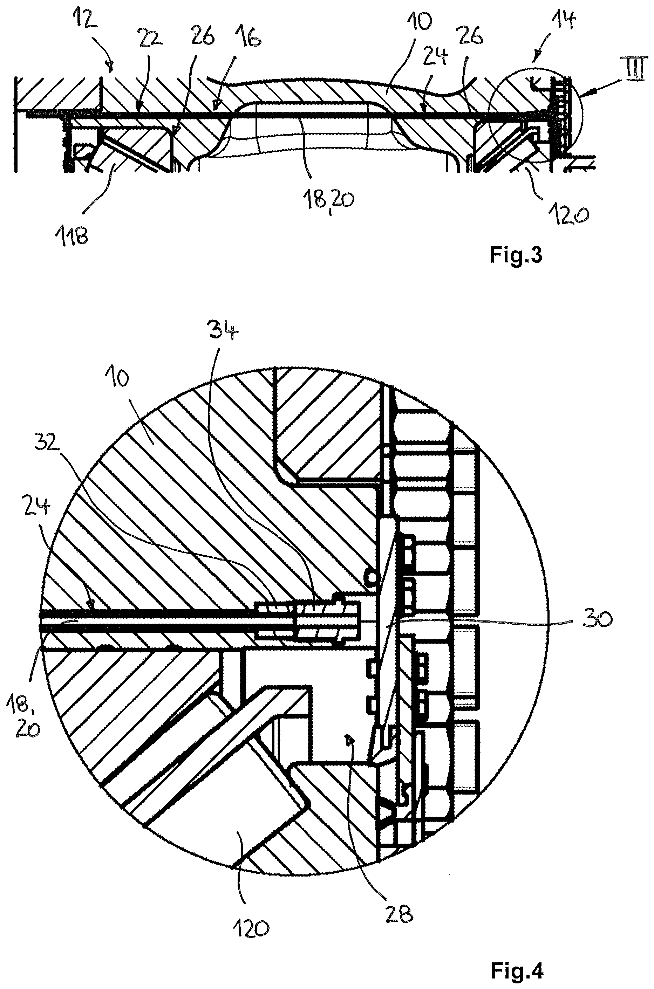

Um, wie aus Fig. 3 ersichtlich, das Schmieren von insbesondere der zweiten Lagereinheit 120 der Hauptlagerung 116 zu verwirklichen, weist erfindungsgemäß der Rotorträger 10 eine sich vom nabenseitigen Endabschnitt 12 zum maschinenträgerseitigen Endabschnitt 14 erstreckende Schmiermittelpassage 16 auf, die fluidleitend mit der zweiten Lagereinheit 120 verbunden ist. In der vorliegend gezeigten Ausführung ist die Schmiermittelpassage 16 als Schmiermittelleitung 18 im Rotorträger 10 ausgebildet.

In einer nicht näher gezeigten Ausführung kann die Schmiermittelpassage 16 auch als ein im Rotorträger durchgehender Schmiermittelkanal ausgebildet sein. In Verbindung mit einer als Schmiermittelkanal ausgebildeten Schmiermittelpassage kann diese wenigstens zwei axial zueinander beabstandete Schmiermittelkanalabschnitte im Rotorträger 10 umfassen, welche durch eine Schmiermittelleitung fluidleitend miteinander verbunden sind. Bei einer derartigen Ausgestaltung der nicht näher gezeigten Schmiermittelpassage werden die zueinander beabstandeten Schmiermittelkanalabschnitte durch entsprechende in den Rotorträger eingebrachte Bohrungen erzeugt. Der Abstand zwischen den zwei Schmiermittelkanalabschnitten kann mittels einer separaten Schmiermittelleitung überbrückt werden.

Die in Fig. 3 gezeigte Ausführung sieht eine Schmiermittelleitung 18 vor, welche eine separate Rohrleitung 20 umfasst. Die Rohrleitung 20 ist in mindestens einem Durchgang 22 am Rotorträger 10 aufgenommen. In der vorliegenden Ausführung erstreckt sich die Rohrleitung 20 vom nabenseitigen Endabschnitt 12 bis zum maschinenträgerseitigen Endabschnitt 14.

Die Rohrleitung 20 ist in zwei axial zueinander beabstandeten Durchgängen 22, 24 angeordnet. Ein erster Durchgang 22 erstreckt sich in Achsrichtung der Mittenachse M vom nabenseitigen Endabschnitt 12 aus und ein zweiter Durchgang 24 erstreckt sich in Achsrichtung vom maschinenträgerseitigen Endabschnitt 14 aus. Die die Rohrleitung 20 aufnehmenden Durchgänge 22, 24 weisen jeweils ein radiales Spiel zur Rohrleitung 20 auf. Die Rohrleitung 20 ist in einer möglichen Ausgestaltung mittels einer nicht näher gezeigten Rohrverschraubung entlang eines Abschnitts einer der Durchgänge 22, 24 gesichert, insbesondere im ersten Durchgang 22 an der Stirnseite des nabenseitigen Endabschnitts 12.

Die Schmiermittelleitung 18 kann als vergleichsweise stabile Rohrleitung 20 ausgebildet oder zumindest abschnittsweise flexibel und somit als Schlauchleitung oder Stahlflex-Leitung ausgeführt sein. In einer Ausführung der Erfindung weist der Rotorträger 10 mehrere über seinen Umfang verteilt solcher erfindungsgemäß ausgebildeter Schmiermittelpassagen 16 auf, wodurch ein kontrolliertes Schmieren der zweiten Lagereinheit 120 am maschinenträgerseitigen Endabschnitt 14 möglich ist.

Am nabenseitigen Endabschnitt 12 und am maschinenträgerseitigen Endabschnitt 14 ist jeweils eine Aufnahme 26 für die erste Lagereinheit 118 bzw. die zweite Lagereinheit 120 ausgebildet. Fig. 4 zeigt eine Detailansicht der in Fig. 3 gekennzeichneten Einkreisung III, welche verdeutlicht, dass die sich vom nabenseitigen Endabschnitt 12 zum maschinenträgerseitigen Endabschnitt 14 erstreckende Schmiermittelleitung 18 in einer der zweiten Lagereinheit 120 zugeordneten Schmiermittelkammer 28 ausmündet.

Die Schmiermittelkammer 28 wird durch Bereiche des Rotorträgers 10, insbesondere Bereiche der Aufnahme 26 für die Lagereinheit 120, des den Rotorträger 10 drehbar aufnehmenden Achszapfen 112 und durch eine am Rotorträger 10 befestigte und mit dem Achszapfen 112 abdichtend in Anlage stehenden Abdeckung 30 begrenzt. In einer Ausführung der Erfindung ist vorgesehen, dass am maschinenträgerseitigen Endabschnitt 14 ein Dichtelement 32 angeordnet ist, das die als Rohrleitung 20 ausgebildete Schmiermittelleitung 18 gegenüber dem Durchgang 24 am maschinenträgerseitigen Endabschnitt 14 des Rotorträgers 10 abdichtet. Ferner ist vorzugsweise am maschinenträgerseitigen Endabschnitt 14 ein Halteteil 34 vorgesehen, welches das Dichtelement 32 verpresst und die Rohrleitung 20 arretiert.

Mittels der im Rotorträger 10 ausgebildeten Schmiermittelpassage 16 ist ein Verfahren zum Warten einer gemäß den oben angeführten Ausführungen beschriebenen Windenergieanlage 100 möglich, das zumindest den Schritt umfasst: Schmieren der zweiten einem maschinenträgerseitigen Endabschnitt 14 des Rotorträgers 10 zugeordneten Lagereinheit 120, mittels einer sich durch den Rotorträger 10 erstreckenden Schmiermittelpassage 16 von einem nabenseitigen Endabschnitt 12 des Rotorträgers 10 aus. Damit ist ein bevorzugt witterungsgeschütztes Führen des Schmiermittels zur zweiten Lagerabschnitt 120 am Rotorträger 10 verwirklicht.

### Bezugszeichenliste

- 10: Rotorträger
- 12: nabenseitiger Endabschnitt
- 14: maschinenträgerseitiger Endabschnitt
- 16: Schmiermittelpassage
- 18: Schmiermittelleitung
- 20: Rohrleitung
- 22,24: Durchgang
- 26: Aufnahme
- 28: Schmiermittelkammer
- 30: Abdeckung
- 32: Dichtelement
- 34: Halteteil

- 50: Rotoranordnung

- 100: Windenergieanlage
- 102: Turm
- 104: Gondel
- 106: Rotornabe
- 108: Rotorblätter
- 110: Spinner
- 112: Achszapfen
- 114: Verschraubung
- 116: Hauptlagerung
- 118: erste Lagereinheit
- 120: zweite Lagereinheit

- M: Mittenachse

## Patentansprüche

1. Rotorträger (10) für eine Rotornabe (106) einer Windenergieanlage (100), welcher dazu eingerichtet ist, mittels einer Hauptlagerung (116) drehbar an einem Achszapfen (112) der Windenergieanlage (100) gelagert zu werden, wobei die Hauptlagerung (116) eine erste Lagereinheit (118) und eine in Achsrichtung des Achszapfens (112) beabstandete, zweite Lagereinheit (120) aufweist, mit
- einem nabenseitigen Endabschnitt (12), dem die erste Lagereinheit (118) zugeordnet ist, und
- einem maschinenträgerseitigen Endabschnitt (14), dem die zweite Lagereinheit (120) zugeordnet ist,
wobei der Rotorträger (10) eine sich vom nabenseitigen zum maschinenträgerseitigen Endabschnitt (12, 14) erstreckende Schmiermittelpassage (16) aufweist, die fluidleitend mit der zweiten Lagereinheit (120) verbunden und dazu eingerichtet ist, die zweite, am maschinenträgerseitigen Endabschnitt (14) angeordnete Lagereinheit (120) von dem nabenseitigen Endabschnitt (12) des Rotorträgers (10) aus zu schmieren.

2. Rotorträger nach Anspruch 1,
**dadurch gekennzeichnet, dass** die Schmiermittelpassage (16) als durchgehender Schmiermittelkanal oder Schmiermittelleitung (18) im Rotorträger ausgebildet ist.

3. Rotorträger nach Anspruch 1,
**dadurch gekennzeichnet, dass** die Schmiermittelpassage (16) wenigstens zwei axial zueinander beabstandete Schmiermittelkanalabschnitte im Rotorträger (10) umfasst, welche durch eine Schmiermittelleitung fluidleitend miteinander verbunden sind.

4. Rotorträger nach Anspruch 3,
**dadurch gekennzeichnet, dass** ein erster Schmiermittelkanalabschnitt sich in Achsrichtung vom nabenseitigen Endabschnitt (12) aus erstreckt und ein zweiter Schmiermittelkanalabschnitt sich in Achsrichtung vom maschinenträgerseitigen Endabschnitt (14) aus erstreckt.

5. Rotorträger nach Anspruch 2,
**dadurch gekennzeichnet, dass** die Schmiermittelleitung (18) eine Rohrleitung (20) aufweist, welche in mindestens einem Durchgang (22, 24) am Rotorträger (10) aufgenommen ist und sich vom nabenseitigen zum maschinenträgerseitigen Endabschnitt (12, 14) des Rotorträgers (10) erstreckt.

6. Rotorträger nach Anspruch 5,
wobei der die Rohrleitung (20) aufnehmende Durchgang (22, 24) ein radiales Spiel zur Rohrleitung (20) hat, und die Rohrleitung (20) vorzugsweise mittels einer Rohrverschraubung entlang eines Abschnitts des Durchgangs (22, 24) gesichert ist.

7. Rotorträger nach Anspruch 3 bis 6,
**dadurch gekennzeichnet, dass** die Schmiermittelleitung (18) zumindest abschnittsweise flexibel ausgeführt ist.

8. Rotorträger nach Anspruch 4 bis 6,
**dadurch gekennzeichnet, dass** am maschinenträgerseitigen Endabschnitt (14) zwischen dem Durchgang (22, 24) und der Rohrleitung (20) ein Dichtelement (32) angeordnet ist.

9. Rotorträger nach einem der vorstehenden Ansprüche,
**dadurch gekennzeichnet, dass** der Rotorträger (10) mehrere über seinen Umfang verteilt angeordnete Schmiermittelpassagen (16) aufweist.

10. Rotorträger nach einem der vorstehenden Ansprüche,
**dadurch gekennzeichnet**, das am nabenseitigen und am maschinenträgerseitigen Endabschnitt (12, 14) jeweils eine Aufnahme (26) für die erste bzw. zweite Lagereinheit (116, 118) vorgesehen ist.

11. Rotoranordnung (50) für eine Windenergieanlage, mit
zumindest einer Rotornabe (106), die zur Montage eines oder mehrerer Rotorblätter (108) eingerichtet ist, und
einem Rotorträger (10) nach einem der Ansprüche 1 bis 10, mit dessen nabenseitigen Ende die Rotornabe (106) drehfest verbunden ist.

12. Windenergieanlage (100) mit
einem Turm (102),
einer auf dem Turm drehbar angeordneten Gondel (104),
einer Rotornabe (106) mit einer Anzahl an Rotorblättern (108), welche mittels eines Rotorträgers (10) drehbar an der Gondel (104) gelagert ist.
**dadurch gekennzeichnet, dass** der Rotorträger (10) nach einem der Ansprüche 1 bis 10 ausgebildet ist.

13. Verfahren zum Warten einer Windenergieanlage (100), insbesondere einer Windenergieanlage nach Anspruch 12, welche eine Rotornabe (106) aufweist, die mittels eines Rotorträgers (10) über eine Hauptlagerung (116) drehbar an einem starr mit einem Maschinenträger der Windenergieanlage (100) verbundenen Achszapfen (112) gelagert ist, wobei die Hauptlagerung (116) für den Rotorträger (10) mindestens eine erste Lagereinheit (118) und eine in Achsrichtung des Achszapfens (112) beabstandete, zweite Lagereinheit (120) aufweist, umfassend den Schritt:
- Schmieren der zweiten, einem maschinenseitigen Endabschnitt (14) des Rotorträgers (10) zugeordneten Lagereinheit (120) über eine sich durch den Rotorträger (10) erstreckende Schmiermittelpassage (16) von einem nabenseitigen Endabschnitt (12) des Rotorträgers (10) aus.

## Claims

1. Rotor carrier (10) for a rotor hub (106) of a wind turbine (100), which is configured to be rotatably mounted on an axle journal (112) of the wind turbine (100) by means of a main bearing arrangement (116), wherein the main bearing arrangement (116) comprises a first bearing unit (118) and a second bearing unit (120) spaced apart in the axial direction of the axle journal (112), with
a hub-side end section (12) to which the first bearing unit (118) is associated, and a machinecarrier-side end section (14) to which the second bearing unit (120) is associated,
wherein the rotor carrier (10) comprises a lubricant passage (16) extending from the hub-side to the machinecarrier-side end section (12, 14), which is in fluid communication with the second bearing unit (120) and is configured to lubricate the second bearing unit (120) arranged at the machinecarrier-side end section (14) from the hub-side end section (12) of the rotor carrier (10).

2. Rotor carrier according to claim 1,
**characterized in that** the lubricant passage (16) is formed as a continuous lubricant channel or lubricant line (18) in the rotor carrier.

3. Rotor carrier according to claim 1,
**characterized in that** the lubricant passage (16) comprises at least two lubricant channel sections in the rotor carrier (10) axially spaced apart from one another, which are connected to one another in fluid communication by a lubricant line.

4. Rotor carrier according to claim 3,
**characterized in that** a first lubricant channel section extends in the axial direction from the hub-side end section (12) and a second lubricant channel section extends in the axial direction from the machinecarrier-side end section (14).

5. Rotor carrier according to claim 2,
**characterized in that** the lubricant line (18) comprises a pipe (20) which is received in at least one passage (22, 24) on the rotor carrier (10) and extends from the hub-side to the machinecarrier-side end section (12, 14) of the rotor carrier (10).

6. Rotor carrier according to claim 5,wherein the passage (22, 24) receiving the pipe (20) has a radial clearance with respect to the pipe (20), and the pipe (20) is preferably secured by means of a pipe fitting along a section of the passage (22, 24).

7. Rotor carrier according to any one of claims 3 to 6,
**characterized in that** the lubricant line (18) is at least partially of flexible design.

8. Rotor carrier according to any one of claims 4 to 6,
**characterized in that** a sealing element (32) is arranged at the machinecarrier-side end section (14) between the passage (22, 24) and the pipe (20).

9. Rotor carrier according to any one of the preceding claims,
**characterized in that** the rotor carrier (10) comprises a plurality of lubricant passages (16) arranged distributed over its circumference.

10. Rotor carrier according to any one of the preceding claims,
**characterized in that** a seat (26) for the first and second bearing unit (116, 118) respectively is provided at the hub-side and at the machinecarrier-side end section (12, 14).

11. Rotor assembly (50) for a wind turbine, comprising
at least one rotor hub (106) configured for mounting one or more rotor blades (108), and
a rotor carrier (10) according to one of claims 1 to 10, with the hub-side end of which the rotor hub (106) is connected in a rotationally fixed manner.

12. Wind turbine (100) comprising
a tower (102),
a nacelle (104) rotatably arranged on the tower,
a rotor hub (106) with a number of rotor blades (108), which is rotatably mounted on the nacelle (104) by means of a rotor carrier (10),
**characterized in that** the rotor carrier (10) is configured according to one of claims 1 to 10.

13. Method for servicing a wind turbine (100), in particular a wind turbine according to claim 12, which comprises a rotor hub (106) that is rotatably mounted by means of a rotor carrier (10) via a main bearing arrangement (116) on an axle journal (112) rigidly connected to a machine carrier of the wind turbine (100), wherein the main bearing arrangement (116) for the rotor carrier (10) comprises at least a first bearing unit (118) and a second bearing unit (120) spaced apart in the axial direction of the axle journal (112), comprising the step:
lubricating the second bearing unit (120) associated with a machine-side end section (14) of the rotor carrier (10) via a lubricant passage (16) extending through the rotor carrier (10) from a hub-side end section (12) of the rotor carrier (10).

## Revendications

1. Support de rotor (10) pour un moyeu de rotor (106) d'une éolienne (100), qui est mis au point pour être monté de manière rotative sur un tourillon (112) de l'éolienne (100) au moyen d'un palier principal (116), dans lequel le palier principal (116) présente une première unité de montage (118) et une deuxième unité de montage (120) espacée dans la direction axiale du tourillon (112), avec
- une section d'extrémité côté moyeu (12), à laquelle est associée la première unité de montage (118), et
- une section d'extrémité côté support de machine (14), à laquelle est associée la deuxième unité de montage (120),
dans lequel le support de rotor (10) présente un passage de lubrifiant (16) s'étendant depuis la section d'extrémité côté moyeu à la section d'extrémité côté support de machine (12, 14), lequel est relié avec acheminement de fluide à la deuxième unité de montage (120) et est mis au point pour lubrifier la deuxième unité de montage (120) disposée sur la section d'extrémité côté support de machine (14) depuis la section d'extrémité côté moyeu (12) du support de rotor (10).

2. Support de rotor selon la revendication 1,
**caractérisé en ce que** le passage de lubrifiant (16) est réalisé comme canal de lubrifiant continu ou conduite de lubrifiant (18) dans le support de rotor.

3. Support de rotor selon la revendication 1,
**caractérisé en ce que** le passage de lubrifiant (16) comprend au moins deux sections de canal de lubrifiant espacées axialement l'une de l'autre dans le support de rotor (10), lesquelles sont reliées entre elles avec acheminement de lubrifiant par une conduite de lubrifiant.

4. Support de rotor selon la revendication 3,
**caractérisé en ce qu'**une première section de canal de lubrifiant s'étend dans la direction axiale depuis la section d'extrémité côté moyeu (12) et une deuxième section de canal de lubrifiant s'étend dans la direction axiale depuis la section d'extrémité côté support de machine (14).

5. Support de rotor selon la revendication 2,
**caractérisé en ce que** la conduite de lubrifiant (18) présente une conduite tubulaire (20), qui est logée dans au moins un passage (22, 24) sur le support de rotor (10) et s'étend depuis la section d'extrémité côté moyeu à la section d'extrémité côté support de machine (12, 14) du support de rotor (10).

6. Support de rotor selon la revendication 5,
dans lequel le passage (22, 24) recevant la conduite tubulaire (20) présente un jeu radial par rapport à la conduite tubulaire (20), et la conduite tubulaire (20) est de préférence bloquée au moyen d'un raccord vissé de tuyau le long d'une section du passage (22, 24).

7. Support de rotor selon la revendication 3 à 6,
**caractérisé en ce que** la conduite de lubrifiant (18) est réalisée au moins par sections de manière flexible.

8. Support de rotor selon les revendications 4 à 6,
**caractérisé en ce qu'**un élément d'étanchéité (32) est disposé sur la section d'extrémité côté support de machine (14) entre le passage (22, 24) et la conduite tubulaire (20).

9. Support de rotor selon l'une quelconque des revendications précédentes,
**caractérisé en ce que** le support de rotor (10) présente plusieurs passages de lubrifiant (16) répartis sur sa périphérie.

10. Support de rotor selon l'une quelconque des revendications précédentes,
**caractérisé en ce qu'**un logement (26) pour la première ou la deuxième unité de montage (116, 118) est prévu respectivement sur la section d'extrémité côté moyeu et sur la section d'extrémité côté support de machine (12, 14).

11. Ensemble formant rotor (50) pour une éolienne, avec
au moins un moyeu de rotor (106), qui est mis au point pour monter une ou plusieurs pales de rotor (108), et
un support de rotor (10) selon l'une quelconque des revendications 1 à 10, à l'extrémité côté moyeu duquel le moyeu de rotor (106) est relié de manière solidaire en rotation.

12. Éolienne (100) avec
une tour (102),
une nacelle (104) disposée de manière rotative sur la tour,
un moyeu de rotor (106) avec un nombre de pales de rotor (108), qui est monté de manière rotative sur la nacelle (104) au moyen d'un support de rotor (10),
**caractérisée en ce que** le support de rotor (10) est réalisé selon l'une quelconque des revendications 1 à 10.

13. Procédé d'entretien d'une éolienne (100), en particulier d'une éolienne selon la revendication 12, qui présente un moyeu de rotor (106), qui est monté de manière rotative sur un tourillon (112) relié de manière rigide à un support de machine de l'éolienne (100) par l'intermédiaire d'un palier principal (116) au moyen d'un support de rotor (10), dans lequel le palier principal (116) pour le support de rotor (10) présente au moins une première unité de montage (118) et une deuxième unité de montage (120) espacée dans la direction axiale du tourillon (112), comprenant l'étape :
- de lubrification de la deuxième unité de montage (120) associée à une section d'extrémité côté machine (14) du support de rotor (10) par l'intermédiaire d'un passage de lubrifiant (16) s'étendant à travers le support de rotor (10) depuis une section d'extrémité côté moyeu (12) du support de rotor (10).
